# EUROPÄISCHE PATENTANMELDUNG

(11) **EP 1 033 807 A1**
(43) Veröffentlichungstag der Anmeldung: **06.09.2000**
(21) Anmeldenummer: 99104133.6
(22) Anmeldetag: 02.03.1999
(51) Int. Cl.: H02M 11/00

(54) **Energiewandler**

(71) Anmelder: Amann, Klaus, 78606 Seitingen (DE)
(72) Erfinder: Amann, Klaus, 78606 Seitingen (DE)
(74) Vertreter: Vetter, Hans, Dipl.-Phys. Dr.

(57) **Zusammenfassung**

Es wird ein Energiewandler zur Umwandlung von Umgebungsenergie, wie Strahlungs- oder Teilchenenergie, in elektrische Energie vorgeschlagen. Ein Hochfrequenzgenerator (12) mit einer Frequenz im Bereich von 100 kHz dient zur Steuerung von wenigstens zwei Leistungsendstufenanordnungen (15-18), deren Ausgangssignale zwei identische Hochfrequenztransformatoren (24-27) primärseitig beaufschlagen. Die Sekundärwicklungen (28) dieser Hochfrequenztransformatoren (24-27) sind miteinander verbunden und eingangsseitig an eine Hochleistungsgleichrichteranordnung (29) angeschlossen, an deren Ausgängen eine Nutzspannung (Ua) als Gleichspannung zur Verfügung steht. Die Hochfrequenztransformatoren (24-27) besitzen jeweils einen geschlossenen Rechteckkern (30), wobei diese Rechteckkerne (30) sich beabstandet voneinander gegenüberstehen. Die durch die Hochfrequenztransformatoren (24-27) erzeugten hochfrequenten Felder werden durch Umgebungsenergie auf Grund von Resonanzeffekten verstärkt, so daß am Energiewandler ausgangsseitig eine größere Verbraucherleistung zur Verfügung steht, als eingangsseitig zugeführt wird.

## Beschreibung

Die Erfindung betrifft einen Energiewandler zur Umwandlung von Umgebungsenergie, wie Strahlungs- oder Teilchenenergie, in elektrische Energie.

Die natürliche Umgebung auf der Erde enthält sogenannte "Umgebungsenergie" in vielfältigen Formen, beispielsweise elektromagnetische Strahlung, elektrische und magnetische Felder, Teilchenstrahlung hochenergetischer Teilchen aus dem Weltall, wie beispielsweise Neutrinos, Schwerkraftwirkungen und dergleichen. Eine Vielzahl dieser Energiearten gelangt aus dem Weltraum auf die Erde und wird zum großen Teil von der Sonne emittiert. Andere Energiearten haben natürlichen oder künstlichen Ursprung auf der Erde selbst.

Eine Aufgabe der vorliegenden Erfindung besteht darin, solche Umweltenergie nutzbar zu machen und insbesondere in elektrische Energie umzuwandeln.

Diese Aufgabe wird durch einen Energiewandler mit den Merkmalen des Anspruchs 1 gelöst. Versuche mit entsprechend aufgebauten Energiewandlern haben ergeben, daß die am Ausgang eines solchen Energiewandlers entnommene elektrische Energie bis zum Doppelten der eingangsseitig eingespeisten elektrischen Energie beträgt, das heißt, die umgewandelte und genutzte Umgebungsenergie bei diesem Prozeß liegt in derselben Größenordnung wie die eingespeiste elektrische Energie. Es wird davon ausgegangen, daß die erfindungsgemäß erzeugten Hochfrequenzfelder durch Umgebungsenergie auf Grund von Resonanzeffekten verstärkt werden, so daß durch Gleichrichtung der sekundärseitig in den Hochfrequenztransformatoren erzeugten Ströme elektrische Energie ausgangsseitig zur Verfügung gestellt werden kann, die um den umgewandelten Anteil der Umgebungsenergie höher ist als die eingangsseitig eingespeiste elektrische Energie. Derartige Energiewandler können in vorteilhafter Weise wesentlich zur Lösung von Energieproblemen beitragen, wobei die gewonnene Nutzenergie völlig umweltneutral gebildet werden kann.

Durch die in den Unteransprüchen aufgeführten Maßnahmen sind vorteilhafte Weiterbildungen und Verbesserungen des im Anspruch 1 angegebenen Energiewandlers möglich.

Eine besonders gute Wirkung wird dann erzielt, wenn das wenigstens eine Paar von Rechteckkernen im wesentlichen drehsymmetrisch um 180° zueinander versetzt und beabstandet zu einer Mittelachse angeordnet ist, wobei ein Teil der Schenkel der Rechteckkerne parallel zur Mittelachse ausgerichtet ist.

Um die Leistung zu erhöhen, sind wenigstens zwei weitere Leistungsendstufen und zwei weitere Hochfrequenztransformatoren vorgesehen, wobei die Paare von Rechteckkernen jeweils winkelmäßig versetzt zueinander angeordnet und die Winkel jeweils zwischen allen Rechteckkernen vorzugsweise gleich sind.

Zusätzlich günstig für ein hohes Umwandlungsergebnis hat sich die Anordnung sowohl der Primär- als auch der Sekundärwicklungen auf den von der Mittelachse entfernten Schenkeln der Rechteckkerne erwiesen. Dabei ist es vor allem günstig, wenn die Primär- und Sekundärwicklung übereinander- oder ineinandergewickelt sind, insbesondere bifilar, und die Sekundärwicklung vorzugsweise wenigstens teilweise über die Primärwicklung gewickelt ist. Besonders gute Ergebnisse werden dann erzielt, wenn die Sekundärwicklung bis zur dreifachen Windungszahl der Primärwicklung, vorzugsweise bis zur doppelten Windungszahl beträgt. Ebenfalls trägt es zu einem optimalen Ergebnis bei, wenn die Windungszahl einer Wicklung jeweils weniger als 30, vorzugsweise weniger als 15 Windungen beträgt. Zur Erleichterung der Ausrichtung und zur guten Fixierung der Hochfrequenztransformatoren sind diese auf einer Platte oder zwischen zwei Platten fixiert.

Versuchsergebnisse haben ergeben, daß der angestrebte Effekt vor allem bei Frequenzen des Hochfrequenzgenerators zwischen 95 bis 105 kHz auftritt, vorzugsweise bei 98 kHz.

Um die Leistungsendstufenanordnungen optimal zu steuern, ist der Hochfrequenzgenerator über eine Treiberanordnung mit diesen verbunden, wobei der Hochfrequenzgenerator vorzugsweise über eine Lichtleiteranordnung mit der Treiberanordnung verbunden ist, um unerwünschte induktive Einflüsse zu verhindern.

Bei einer vorteilhaften Ausgestaltung der Erfindung zur Ansteuerung der Leistungsendstufenanordnungen ist die Treiberanordnung oder der Hochfrequenzgenerator zur Erzeugung von zwei Rechtecksignalfolgen ausgebildet, wobei abwechselnd ein Signal der einen und ein Signal der anderen Rechtecksignalfolge gebildet wird und die Signale sich nicht überlappen. Weiterhin besitzt hierzu jede Leistungsendstufenanordnung zwei Leistungsschalteranordnungen, die von den beiden Rechtecksignalfolgen derart gesteuert werden, daß Ströme wechselnder Richtung durch die Primärwicklung des jeweils zugehörigen Hochfrequenztransformators fließen.

Eine zweckmäßige Ausgestaltung der Leistungsendstufenanordnungen besteht darin, daß jeweils die beiden Leistungsschalteranordnungen zusammen mit zwei Kondensatoren eine von einer Gleichspannung beaufschlagte Brückenschaltung bilden, in deren Querzweig die Primärwicklung des zugeordneten Hochfrequenztransformators geschaltet ist. Hierdurch kann in einfacher Weise durch Ansteuerung der beiden Leistungsschalteranordnungen mit den beiden Rechtecksignalfolgen ein leistungsstarkes Hochfrequenzfeld erzeugt werden.

Die Sekundärwicklungen jedes Paars von Hochfrequenztransformatoren sind so in Reihe geschaltet, daß sich die jeweils induzierten Spannungen addieren. Die Beschaltung mit weiteren Sekundärwicklungen weiterer Hochfrequenztransformatoren kann je nach Auslegung und Bedarf in Reihe oder parallel erfolgen.

Zur Versorgung des Energiewandlers mit elektrischer Energie dient zweckmäßigerweise eine von der Netzwechselspannung beaufschlagte Gleichrichteranordnung, wobei die gleichgerichtete Wechselspannung wenigstens den Leistungsendstufenanordnungen zuführbar ist, und wobei vorzugsweise eine Vorrichtung zur Erzeugung einer stabilisierten und/oder geregelten Gleichspannung als Versorgungsspannung für den Hochfrequenzgenerator und/oder die Treiberanordnung vorgesehen ist.

Ein Teil der ausgangsseitigen Nutzspannung kann in vorteilhafter Weise auch als Betriebsspannung zum Betrieb des Energiewandlers vorgesehen sein, so daß dieser nach einer durch die Netzspannung eingeleiteten Startphase ohne elektrische Energiezufuhr arbeiten kann.

Ein Ausführungsbeispiel der Erfindung ist in der Zeichnung dargestellt und in der nachfolgenden Beschreibung näher erläutert. Es zeigen:
- Fig. 1: ein Blockschaltbild eines Energiewandlers als Ausführungsbeispiel der Erfindung,
- Fig. 2: die Wicklungsanordnung eines Hochfrequenztransformators,
- Fig. 3: die Anordnung der vier in Fig. 1 dargestellten Hochfrequenztransformatoren zwischen zwei Platten in der Draufsicht bei abgenommener oberer Platte und
- Fig. 4: eine Seitenansicht der in Fig. 3 dargestellten Anordnung.

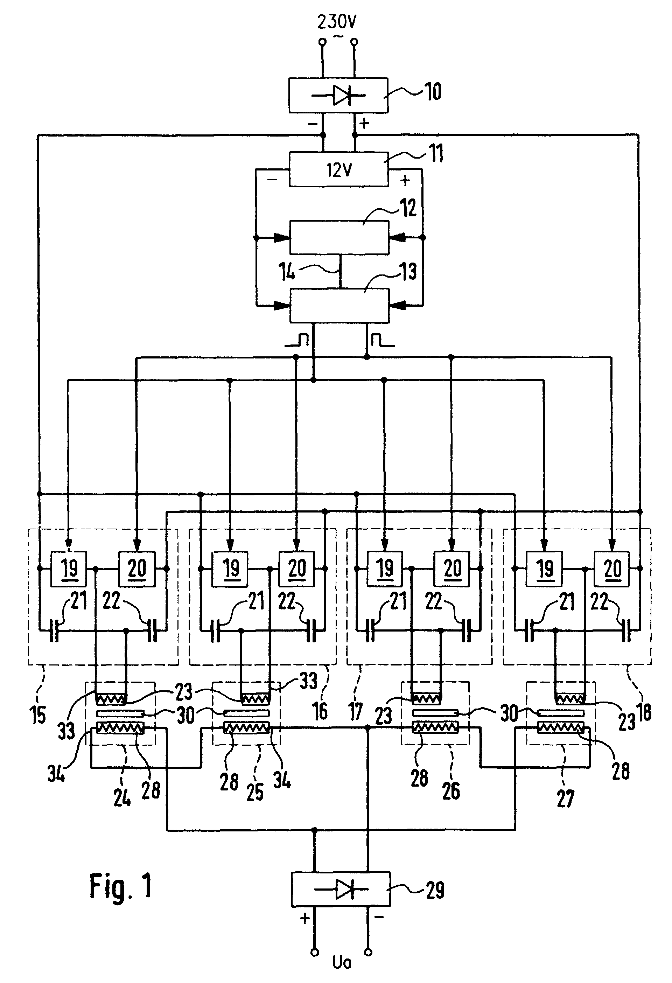

Bei dem in Fig. 1 als Blockschaltbild dargestellten Energiewandler wird eine eingangsseitige Versorgungswechselspannung, beispielsweise die Netzspannung von 230 Volt, mittels einer Gleichrichteranordnung 10 in eine Versorgungsgleichspannung umgewandelt. Von dieser wird unter anderem auch ein Spannungsregler 11 gespeist, der einen Hochfrequenzgenerator 12, im folgenden HF-Generator 12 genannt, und eine Treiberanordnung 13 mit einer Versorgungsgleichspannung von 12 Volt versorgt. Der Spannungsregler 11 könnte die erforderliche Versorgungsgleichspannung prinzipiell auch direkt aus der Versorgungswechselspannung bilden. Dabei hängt die Höhe der Versorgungsgleichspannung selbstverständlich vom jeweils zu speisenden Gerät ab, so daß auch andere und mehrere Versorgungsgleichspannungen gebildet werden können. Anstelle eines Spannungsreglers kann prinzipiell auch eine andere Spannungsquelle treten, die eine stabilisierte Versorgungsgleichspannung zur Verfügung stellt.

Der HF-Generator 12 erzeugt eine Hochfrequenz von 98 kHz, was sich bei Versuchen als günstigster Wert erwiesen hat. In Abhängigkeit der Auslegung der übrigen Bauteile kann diese Frequenz im Einzelfall auch anders gewählt werden, wobei außerhalb des Bereichs von 95 - 105 kHz durchweg schlechtere Ergebnisse erzielt wurden.

Der HF-Generator 12 steuert die Treiberanordnung 13 mit einer Signalfolge der genannten Frequenz über einen Lichtleiter 14, um unerwünschte induktive Einwirkungen zu vermeiden. Bei entsprechender Abschirmung kann die Steuerung selbstverständlich auch über metallische Leiter erfolgen. Für die Lichtleiterübertragung sind in üblicher Weise nicht dargestellte Koppel- und Entkoppelglieder im HF-Generator 12 und in der Treiberanordnung 13 erforderlich.

Die Treiberanordnung 13 liefert ausgangsseitig an ihren beiden Ausgängen zwei Rechtecksignalfolgen, wobei zeitlich aufeinanderfolgend abwechselnd ein Signal der einen und ein Signal der anderen Rechtecksignalfolge gebildet wird. Um in den nachfolgenden Leistungsendstufenanordnungen Kurzschlüsse zu vermeiden, dürfen sich diese Signale nicht überlappen. Die Frequenz dieser Rechtecksignalfolgen entspricht der Frequenz des HF-Generators 12.

Durch die Treiberanordnung 13 werden vier parallele gleichartige Leistungsendstufenanordnungen 15 - 18 gesteuert. Jede Leistungsendstufenanordnung besteht aus zwei Leistungstransistoren 19, 20, deren in Reihe zueinander geschaltete Schaltstrecken den einen Längszweig einer Brückenschaltung bilden und deren anderer Längszweig durch zwei in Reihe geschaltete Kondensatoren 21, 22 gebildet wird. Die Steueranschlüsse der beiden Leistungstransistoren 19, 20 werden durch die beiden Rechtecksignalfolgen gesteuert, so daß die Leistungstransistoren 19, 20 abwechselnd ihren Schaltzustand wechseln. Die durch die Leistungstransistoren 19, 20 und die Kondensatoren 21, 22 gebildeten Brückenschaltungen der vier Leistungsendstufenanordnungen 15 - 18 werden jeweils durch die Gleichspannung am Ausgang der Gleichrichteranordnung 10 beaufschlagt.

Als Leistungstransistoren können beispielsweise Feldeffekttransistoren vom Typ FA 38 SA 50 A 350 V verwendet werden. Als Kondensatoren wurden bei einem Versuchsaufbau Kondensatoren mit einer Kapazität von 1200 µF, 350 V verwendet.

In den Brückenquerzweigen der als Brückenschaltungen ausgebildeten Leistungsendstufenanordnungen 15 - 18 sind jeweils die Primärwicklungen 23 von vier Hochfrequenztransformatoren 24 - 27, im folgenden als HF-Transformatoren 24 - 27 bezeichnet, geschaltet. Dabei bilden die Hochfrequenztransformatoren 24, 25 ein erstes Paar von Hochfrequenztransformatoren und die Hochfrequenztransformatoren 26, 27 ein zweites Paar. Bei jedem Paar von Hochfrequenztransformatoren 24, 25 bzw. 26, 27 sind die Primärwicklungen 23 so mit den Leistungsendstufenanordnungen 15 - 18 verbunden, daß die jeweilige Stromrichtung räumlich gesehen immer entgegengesetzt verläuft. Dabei wird abwechselnd bei Leitendwerden des Leistungstransistors 19 der Kondensator 21 über die Primärwicklung 23 entladen, und danach bei Leitendwerden des Leistungstransistors 20 wird der Kondensator 22 über die Primärwicklung 23 entladen, so daß jeweils abwechselnd entgegengesetzt gerichtete Ströme erzeugt werden. Die Kondensatoren 21, 22 werden dabei jeweils wieder über die Gleichspannung am Ausgang der Gleichrichteranordnung 10 geladen, die ständig an den Brückenschaltungen und damit an den Reihenschaltungen der Kondensatoren 21, 22 anliegt.

Die beiden Sekundärwicklungen 28 der beiden HF-Transformatoren 24, 25 sind so in Reihe geschaltet, daß sich die jeweils induzierten Spannungen addieren. Dies trifft selbstverständlich auch für die Reihenschaltung der beiden Sekundärwicklungen 28 der HF-Transformatoren 26, 27 zu. Die erste Reihenschaltung der Sekundärwicklungen 28 der HF-Transformatoren 24, 25 ist parallel zur zweiten Reihenschaltung der Sekundärwicklungen 28 der HF-Transformatoren 26, 27 geschaltet, so daß sich die Ströme addieren. Je nach Auslegung und Leistungsbedarf können auch hier Reihenschaltungen treten. Im Ausführungsbeispiel sind die beiden parallelgeschalteten Reihenschaltungen von je zwei Sekundärwicklungen 28 eingangsseitig mit einer Gleichrichteranordnung 29 verbunden, durch die die sekundärseitig induzierten hochfrequenten Spannungen in eine Ausgangs-Gleichspannung Ua umgewandelt werden, die als Nutzspannung zur Verfügung steht.

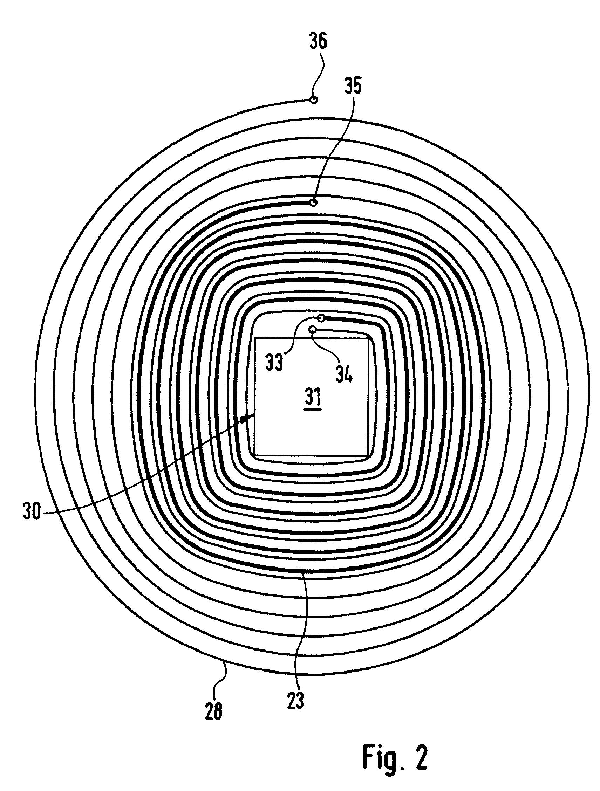

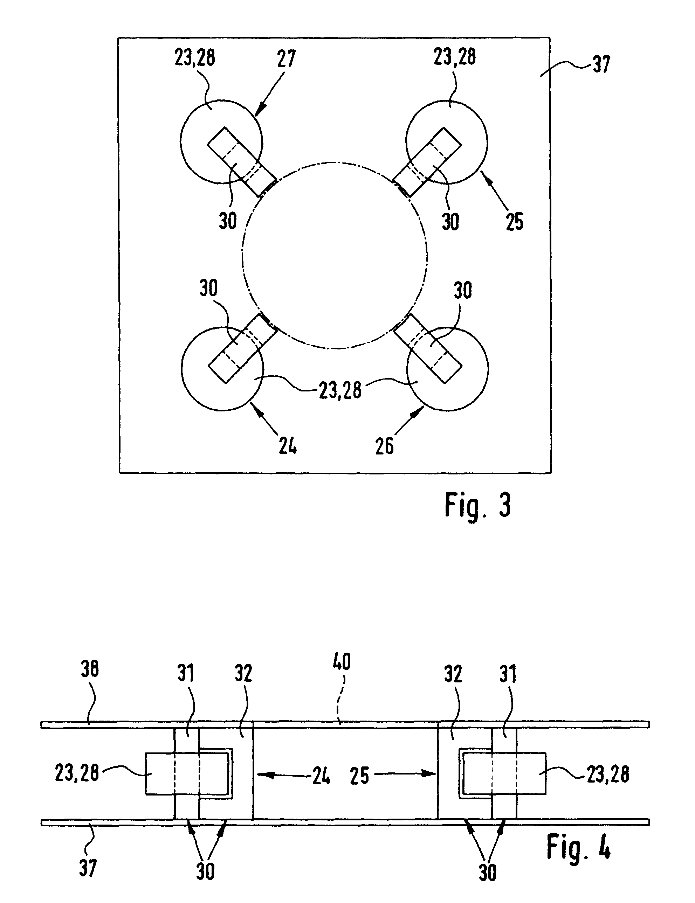

Die Wirkungsweise des beschriebenen Energiewandlers besteht darin, daß die von den vier HF-Transformatoren 24-27 erzeugten hochfrequenten Felder durch Umgebungsenergie verstärkt werden. Dies erfolgt beispielsweise dadurch, daß die hochfrequenten Felder durch Resonanzeffekte und/oder Wechselwirkungen mit Energieformen in der Umgebungsenergie, wie elektromagnetische Strahlung, Teilchenenergie hochenergetischer Teilchen, wie Neutrinos, magnetische oder elektrische Feldenergie, Gravitationsfelder und dergleichen, angeregt werden, so daß die angestrebte Verstärkung bewirkt wird. Diese Verstärkung der hochfrequenten Felder führt zu einer entsprechenden Erhöhung der sekundärseitig in den HF-Transformatoren 24-27 erzeugten elektrischen Energie, so daß die eingangsseitig aufgenommene Leistung zuzüglich der umgewandelten Umgebungsenergie pro Zeiteinheit die ausgangsseitig abnehmbare Leistung ergeben. Messungen mit den in den Fig. 2 bis 4 noch näher beschriebenen HF-Transformatoren haben bei einer eingangsseitig zugeführten Leistung von 800 W eine Ausgangsleistung von 1.500 W ergeben. Die Auslegung der HF-Transformatoren 24-27 und die Wahl der Hochfrequenz haben dabei einen wesentlichen Einfluß auf dieses Ergebnis.

Die in den Fig. 2 bis 4 dargestellten HF-Transformatoren 24-27 besitzen jeweils einen geschlossenen Rechteckkern 30, der beim Versuchsaufbau einen Kernquerschnitt von 1,8 x 1,8 cm² sowie Außenmaße von 8 x 6,5 cm besaß. Dieser Rechteckkern 30 ist als Ferritkern ausgebildet, wobei auch andere für HF-Transformatoren geeignete Materialien möglich sind. Im Ausführungsbeispiel wird der geschlossene Rechteckkern 30 durch einen bewickelten I-Kern 31 und einen nichtbewickelten E-Kern 32 gebildet, wobei der I-Kern 31 einen der längeren Schenkel des Rechteckkerns 30 darstellt. Es ist selbstverständlich prinzipiell auch möglich, den längeren Schenkel des E-Kerns 32 zu bewickeln und/oder anstelle eines I-Kerns 31 einen weiteren E-Kern einzusetzen.

Der I-Kern 31 ist gemäß Fig. 2 mit der Primärwicklung 23 und der Sekundärwicklung 28 bifilar bewickelt. Dabei besitzt die Primärwicklung 23 sechs Windungen und die Sekundärwicklung 28 zwölf Windungen. Diese Windungszahlen können je nach Auslegung und Leistung bezüglich des Windungszahlenverhältnisses und der Windungszahlen variieren, jedoch bewegen sich diese Variationen in einem Bereich von im allgemeinen unter dreißig Windungen. Bei der realisierten Ausführung wurde ein Kupferband von 0,2 mm Dicke und 43 mm Breite für beide Wicklungen gewählt. Das Kupferband für die Primärwicklung hatte eine Gesamtlänge von 680 mm und für die Sekundärwicklung eine Gesamtlänge von 3.760 mm. Die beiden aufeinandergelegten Kupferbänder werden zunächst gemeinsam gewickelt, so daß nach dem Wicklungsende der Primärwicklung 23 noch sechs verbleibende Windungen der Sekundärwicklung 28 darübergewickelt werden. Die inneren Anschlüsse 33, 34 der Primärwicklung 23 und der Sekundärwicklung 28 sowie der äußere Anschluß 35 der Primärwicklung 23 werden elektrisch mit von außen zugänglichen Anschlußklemmen in nicht näher dargestellter Weise verbunden, während der äußere Anschluß 36 der Sekundärwicklung 28 ohnehin von außen leicht zugänglich ist. Bei derartigen Transformatoren übliche Isoliervorkehrungen zur Vermeidung von Spannungsdurchschlägen zwischen den Windungen werden in üblicher Weise vorgesehen. Zur Vedeutlichung der Darstellung ist die Primärwicklung 23 mit einer gegenüber der Sekundärwicklung 28 dickeren Linie dargestellt.

Die vier HF-Transformatoren 24-27 sind zwischen zwei Platten 37, 38 so fixiert, daß die Rechteckkerne 30 drehsymmetrisch zu einer fiktiven Mittelachse 39 angeordnet sind. Das heißt, sie besitzen alle den gleichen Abstand von dieser Mittelachse 39, wobei auch die Winkel zwischen den einzelnen Rechteckkernen 30 identisch sind, bei vier HF-Transformatoren 24-27 beträgt der Winkel also jeweils 90°. Die I-Kerne 31 mit den Wicklungen 23, 28 sind dabei von der Mittelachse 39 abgewandt. Die das erste Paar bildenden HF-Transformatoren 24, 25 sind in einer Ebene angeordnet, das heißt, sie stehen sich gegenüber, was auch für das zweite Paar von HF-Transformatoren 26, 27 zutrifft.

Bei einer einfacheren Ausführung kann die obere Platte 38 auch entfallen. Die Platten bestehen beispielsweise aus Kunststoff, sie können jedoch auch aus Metall bestehen. Im Falle der oberen Platte 38 wird in einem solchen Falle dann eine zentrale, kreisscheibenförmige Öffnung 40 vorgesehen, die wenigstens radial bis zu den Rechteckkernen 30 reicht.

In einer einfachsten Ausführung können auch nur zwei sich gegenüberstehende HF-Transformatoren vorgesehen sein, wobei sich die Gesamtzahl von HF-Transformatoren auch gegenüber dem Ausführungsbeispiel noch paarweise vergrößern kann. Entsprechend verkleinert und vergrößert sich die Zahl der Leistungsendstufenanordnungen.

Die ausgangsseitig des Energiewandlers abgegebene Leistung kann in einer weiteren, nicht dargestellten Ausführungsform der Erfindung auch wieder eingangsseitig zugeführt werden, so daß bei entsprechender Auslegung eine Netzversorgung ganz oder zum großen Teil entfallen kann. Allenfalls für eine Anlaufphase ist dann noch eine zusätzliche eingangsseitige Netzversorgung erforderlich.

## Patentansprüche

1. Energiewandler zur Umwandlung von Umgebungsenergie, wie Strahlungs- oder Teilchenenergie, in elektrische Energie, mit einem Hochfrequenzgenerator (12) mit einer Frequenz im Bereich von 100 kMz zur Steuerung von wenigstens zwei Leistungsendstufenanordnungen (15-18), deren Ausgangssignale eine entsprechende Zahl von identischen Hochfrequenztransformatoren (24-27) primärseitig beaufschlagen, deren Sekundärwicklungen (28) miteinander verbunden und eingangsseitig an eine Hochleistungsgleichrichteranordnung (29) angeschlossen sind, an deren Ausgängen eine Nutzspannung (Ua) als Gleichspannung zur Verfügung steht, wobei die Hochfrequenztransformatoren (24-27) jeweils einen geschlossenen Rechteckkern (30) besitzen und diese Rechteckkerne (30) sich beabstandet voneinander gegenüberstehen.

2. Energiewandler nach Anspruch 1, dadurch gekennzeichnet, daß das wenigstens eine Paar von Rechteckkernen (30) im wesentlichen drehsymmetrisch um 180° zueinander versetzt und beabstandet zu einer Mittelachse (39) angeordnet ist und ein Teil der Schenkel der Rechteckkerne (30) parallel zur Mittelachse (39) ausgerichtet ist.

3. Energiewandler nach Anspruch 1 oder 2, dadurch gekennzeichnet, daß wenigstens zwei weitere Leistungsendstufenanordnungen (15-28) und zwei weitere Hochfrequenztransformatoren (24-27) vorgesehen sind, wobei die Paare von Rechteckkernen (30) jeweils winkelmäßig versetzt zueinander angeordnet und die Winkel jeweils zwischen allen Rechteckkernen (30) vorzugsweise gleich sind.

4. Energiewandler nach einem der vorhergehenden Ansprüche, dadurch gekennzeichnet, daß sowohl die Primärals auch die Sekundärwicklungen (23, 28) auf den von der Mittelachse (39) entfernten Schenkeln (31) der Rechteckkerne (30) angeordnet sind.

5. Energiewandler nach einem der vorhergehenden Ansprüche, dadurch gekennzeichnet, daß die Primär- und Sekundärwicklungen (23, 28) übereinander- oder ineinandergewickelt sind, insbesondere bifilar, und daß die Sekundärwicklung (28) vorzugsweise wenigstens teilweise über die Primärwicklung (23) gewickelt ist.

6. Energiewandler nach einem der vorhergehenden Ansprüche, dadurch gekennzeichnet, daß die Sekundärwicklung (28) bis zur dreifachen Windungszahl der Primärwicklung beträgt, vorzugsweise bis zur doppelten Windungszahl.

7. Energiewandler nach einem der vorhergehenden Ansprüche, dadurch gekennzeichnet, daß die Windungszahl einer Wicklung (23, 28) jeweils weniger als 30, vorzugsweise weniger als 15 Windungen beträgt.

8. Energiewandler nach einem der vorhergehenden Ansprüche, dadurch gekennzeichnet, daß die Hochfrequenztransformatoren (24-27) auf einer Platte (37) oder zwischen zwei Platten (37, 38) fixiert sind.

9. Energiewandler nach einem der vorhergehenden Ansprüche, dadurch gekennzeichnet, daß die Frequenz des Hochfrequenzgenerators (12) 95-105 kHz beträgt, vorzugsweise 98 kHz.

10. Energiewandler nach einem der vorhergehenden Ansprüche, dadurch gekennzeichnet, daß der Hochfrequenzgenerator (12) über eine Treiberanordnung (13) mit den Leistungsendstufenanordnungen (15-18) verbunden ist, wobei der Hochfrequenzgenerator (12) vorzugsweise über eine Lichtleiteranordnung (14) mit der Treiberanordnung (13) verbunden ist.

11. Energiewandler nach Anspruch 10, dadurch gekennzeichnet, daß die Treiberanordnung (13) oder der Hochfrequenzgenerator (12) zur Erzeugung von zwei Rechtecksignalfolgen ausgebildet ist, wobei abwechselnd ein Signal der einen und ein Signal der anderen Rechtecksignalfolge gebildet wird und die Signale sich nicht überlappen.

12. Energiewandler nach Anspruch 11, dadurch gekennzeichnet, daß jede Leistungsendstufenanordnung (15-18) zwei Leistungsschalteranordnungen (19,20) besitzt, die von den beiden Rechtecksignalfolgen derart gesteuert werden, daß Ströme wechselnder Richtung durch die Primärwicklung (23) des jeweils zugehörigen Hochfrequenztransformators (24-27) fließen.

13. Energiewandler nach Anspruch 12, dadurch gekennzeichnet, daß die beiden Leistungsschalteranordnungen (19, 20) mit zwei Kondensatoren (21, 22) eine von einer Gleichspannung beaufschlagte Brückenschaltung bilden, in deren Querzweig die Primärwicklung (23) des zugeordneten Hochfrequenztransformators (24-27) geschaltet ist.

14. Energiewandler nach einem der vorhergehenden Ansprüche, dadurch gekennzeichnet, daß die Hochfrequenzfelder der Hochfrequenztransformatoren (24-27) jeweils drehsymmetrisch zu einer Mittelachse (39) ausgebildet sind.

15. Energiewandler nach einem der vorhergehenden Ansprüche, dadurch gekennzeichnet, daß die Sekundärwicklungen (28) jedes Paars von Hochfrequenztransformatoren (24-27) in Reihe geschaltet sind.

16. Energiewandler nach einem der vorhergehenden Ansprüche, dadurch gekennzeichnet, daß eine von der Netzwechselspannung beaufschlagte Gleichrichteranordnung (10) vorgesehen ist, wobei die gleichgerichtete Wechselspannung wenigstens den Leistungsendstufenanordnungen (15-18) zuführbar ist, und wobei vorzugsweise eine Vorrichtung (11) zur Erzeugung einer stabilisierten und/oder geregelten Gleichspannung als Versorgungsspannung für den Hochfrequenzgenerator (12) und/oder die Treiberanordnung (13) vorgesehen ist.

17. Energiewandler nach einem der vorhergehenden Ansprüche, dadurch gekennzeichnet, daß die Rechteckkerne (30) aus einem Ferrit oder ferritischen Material bestehen.

18. Energiewandler nach einem der vorhergehenden Ansprüche, dadurch gekennzeichnet, daß ein Teil der ausgangsseitigen Nutzspannung als Betriebsspannung für den Betrieb des Energiewandlers vorgesehen ist.
